(19) Europäisches Patentamt
European Patent Office
Office européen des brevets

(11) EP 1 454 886 A1

(12) **EUROPEAN PATENT APPLICATION**

(43) Date of publication:
**08.09.2004 Bulletin 2004/37**

(51) Int Cl.[7]: **C02F 11/14**, C02F 1/26, C02F 1/52, C01F 11/18

(21) Application number: **03004734.4**

(22) Date of filing: **04.03.2003**

(84) Designated Contracting States:
**AT BE BG CH CY CZ DE DK EE ES FI FR GB GR HU IE IT LI LU MC NL PT SE SI SK TR**
Designated Extension States:
**AL LT LV MK RO**

(71) Applicant: **SOLECO s.r.l.**
**58022 Follonica GR (IT)**

(72) Inventor: **Landini, Alcide**
**58022 Follonica GR (IT)**

(74) Representative: **Celestino, Marco**
**ABM, Agenzia Brevetti & Marchi,**
**Viale Giovanni Pisano, 31**
**56123 Pisa (IT)**

(54) **Process for disposal of calcareous mud**

(57) A process for separating and extracting calcium carbonate from calcareous mud, by reaction of the mud, once separated from the excess water, with a solution of ammonium chloride obtaining a gaseous product and a solid product. The gaseous product is then treated with a solution of calcium chloride obtaining a solution of calcium carbonate and ammonium chloride, from which solution a product is derived rich of calcium carbonate and a solution of ammonium chloride. Then, the solution of ammonium chloride is recirculated into the step of reaction of the mud. The solid product can be added to a aqueous solution at a predetermined pH, then separating an inert precipitate and a solution of calcium chloride, which is eventually circulated again into said step of treating the gaseous product. The inert precipitate can be treated with a soluble reagent capable of forming insoluble salts with calcium, obtaining a solid intermediate product, which is then dried and milled with sand and cement making a ready-for-use mortar. The amount of mud coming from industrial processes or from mining areas is then reduced obtaining a main product rich of calcium carbonate and a secondary inert product that can be used either directly or as ingredient to make a gluing material for the building industry.

Fig. 2

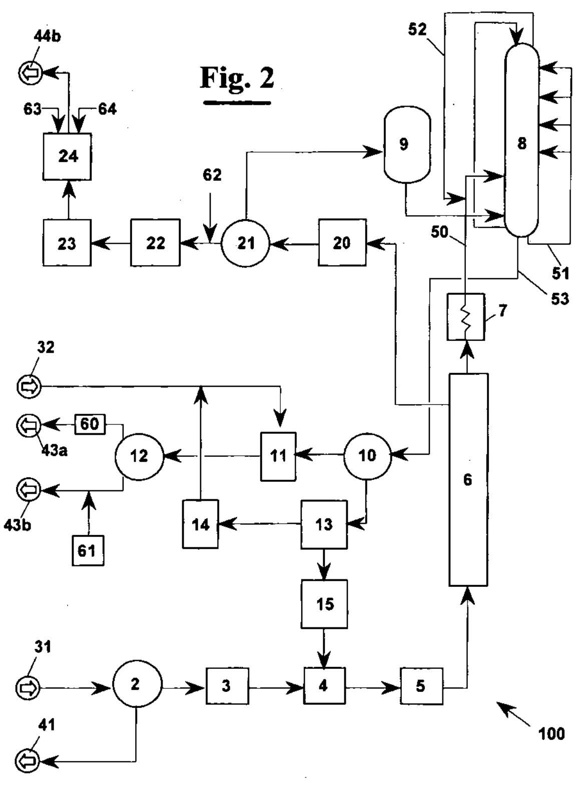


EP 1 454 886 A1

## Description

### Field of the invention

The present invention relates to the disposal of industrial sludge, resulting from industrial processes as waste material, and in particular it relates to a process for disposal of calcareous mud, for example mud deriving from mining or from stone finishing processes.

Furthermore, the invention relates to an industrial plant that carries out this process.

### Description of the prior art

As known, in most industrial processes, in added to the main products, a high amount of waste material or mud derives which must be further treated before being disposed of.

The mud, in fact, must be neutralised and cleaned before the final disposal, which is made carrying it to special dump areas. Therefore, the presence of the mud causes high additional plant costs, because additional means must be arranged that carry out the above described steps of neutralising, temporary storing, carrying and disposal.

In any case, the disposal of mud, even if inert, is highly polluting for the environment. In addition, once the nearest dumps are completely filled, the costs rise because farther dumps must be searched and used.

### Summary of the invention.

It is therefore object of the present invention to provide a process for separating and extracting calcium carbonate from calcareous mud capable of reducing the amount of waste material coming from industrial processes or from mining areas and destined to dumps.

It is another object of the present invention to provide a process for separating and extracting calcium carbonate from calcareous mud that is compatible with the environment and allows to make a main product rich of calcium carbonate and a secondary inert product without the creation of polluting material and that has then a soft impact on the environment.

It is also object of the present invention to allow this secondary inert product to be used either directly or as ingredient to make a gluing material for the building industry.

It is another object of the present invention to provide a process for separating and extracting calcium carbonate from calcareous mud that is not expensive.

These and other objects are achieved by the process according to the present invention, for separating and extracting calcium carbonate from mud, in particular calcareous mud, whose main feature is of providing the following steps:

- reaction of the mud, that has been separated from the excess water, with a solution of ammonium chloride obtaining a gaseous product and a solid product;
- treating the gaseous product with a solution of calcium chloride obtaining a solution of calcium carbonate and ammonium chloride;
- separating from said solution of calcium carbonate and ammonium chloride a product rich of calcium carbonate and a solution of ammonium chloride; and
- circulating again said solution of ammonium chloride into the step of reaction of the mud.

Advantageously, the process as above described comprises, for said solid product coming from the reaction of the mud with the solution of ammonium chloride, the further steps of:

- reaction of said solid product with a aqueous solution at a predetermined pH;
- separating a solution of calcium chloride and an inert precipitate from said reaction;
- circulating again said solution of calcium chloride into said step of treating the gaseous product.

Advantageously, the other steps are provided of:

- treating said inert precipitate with a soluble reagent capable of forming insoluble salts with calcium, obtaining a solid intermediate product, in particular said soluble reagent is chosen among: sodium silicate, potassium silicate, sulphuric acid, sodium sulphate, potassium sulphate, sodium fluoride;
- drying and milling said intermediate product;
- treating the intermediate product dried and milled with sand and cement making a ready-for-use mortar.

Advantageously, the product rich of calcium carbonate is subject to rinsing in water and then to concentration by separating the rinsing water and by treating to obtain a slurry containing calcium carbonate, with the added of emulsifying agents for decelerating the decantation of the calcium carbonate. Said emulsifying agents are chosen among: carboxymethylcellulose, methylcellulose, ethylcellulose, arabian gum, polyvinyl chloride, emulsions of latex and gum.
Alternatively, the product rich of calcium carbonate is sent to an oven and dried.
Advantageously, the reaction of the mud with the solution of ammonium chloride is carried out at a temperature set between 270°C and 450°C.
Preferably, the reaction of the mud with the solution of ammonium chloride is carried out in a oven with conveyor belts.
Preferably, the solution of ammonium chloride separated by calcium carbonate is concentrated by evaporation before being circulated again in the process.
Advantageously, the treatment of the gaseous product with the solution of calcium chloride obtaining a solution of calcium carbonate and ammonium chloride is done in a absorption column. In particular, to obtain predetermined reaction rate and concentration the recirculation of the liquid and of the gas present in the column is carried out.
Preferably, before the inlet of the gaseous product in the column a cooling step is provided of the gaseous product to facilitate the following absorption step in the column.
Advantageously, the separating operation is filtration, in particular executed by means of vacuum rotational filters.
Preferably, 100-500 g are used of sodium silicate for each kg of inert precipitate during the corresponding treatment.
Advantageously, the pH adjustment of the solid product coming from the reaction of the filtered mud and of the ammonium chloride is made by means of added of a predetermined amount of a 30% solution of calcium hydroxide.

Brief description of the drawings

The invention will be made clearer with the following description of an embodiment thereof, exemplifying but not limitative, with reference to attached drawings wherein:

- figure 1 shows a possible diagrammatical view of a simplified process for separating and extracting calcium carbonate from calcareous mud, according to the present invention;
- figure 2 shows a possible simplified diagrammatical view alternative to the diagrammatical view of figure 1 of the process for separating and extracting calcium carbonate from calcareous mud, according to the present invention;
- figure 3 shows a simplified block diagram of the process described by the diagrammatical view of figure 2.

Description of the preferred embodiment

With reference to figure 1, a possible simplified diagrammatical view of a process according to the invention for separating and extracting calcium carbonate from calcareous mud, for example coming from stone extractions or finishing.
The process 100 starts, as in the case of figure 1, with a possible preliminary step 2 of separating the mud, coming from a storing zone 31, from the excess process water, eliminated in 41. This step can be executed for example by means of rotational filters.
Then, the remaining solid material, i.e. the filtered mud, is removed continually from filter 2 by a doctor blade and conveyed to a storage tank, block 3, for then being mixed, block 4, with a solution of ammonium chloride coming from a reservoir, block 15. The mixing step between the filtered mud and the solution of ammonium chloride can be carried out for example in an array of mixers in order to provide a good contact between the components in a short time.
Then, the mixture of mud and ammonium chloride is sent to another reservoir, block 5, and from there supplied to an oven having conveyor belts, block 6. In oven 6 the reaction is carried out between mud, and in particular between the calcium carbonate in it present, and the ammonium chloride at a temperature set between 270°C and 450°C. This reaction gives a solid product and a gaseous product.
In particular, the gaseous product is withdrawn from oven 6, for example by means of bilobular pumps, not shown, and fed by a line 50, after preliminary cooling to a heat exchanger, block 7, to an absorption column, block 8.
In the absorption column, block 8, the gaseous product is caused to react with a solution of ammonium chloride, coming from a collecting reservoir, block 9. For achieving predetermined reaction rate and concentration the recirculation is provided of the liquid, line 51, at many levels of column 9 as well as the gas is recirculated, line 52. When the solution present on the lowest part of the absorption column, block 8, and containing calcium carbonate ($CaCO_3$), Ammonium chloride ($NH_4Cl$) and water ($H_2O$), achieves predetermined values, it is released and conveyed

along line 53 to a filter, block 10. The filtration causes the separation of a solution of ammonium chloride from the calcium carbonate present, which are conveyed respectively to block 13 and block 11 for further treatment as detailed below.

The solution of ammonium chloride is concentrated by evaporation, block 13, for being then circulated again to the reservoir of ammonium chloride, block 15. The water extracted from the evaporator, block 13, is circulated again in the process 100 and added to process water that enters at inlet 32.

The calcium carbonate exiting from the filter, block 10, is instead subject to rinsing, block 11, and to further filtering, block 12. Then, the calcium carbonate washed and filtered can be milled into powder and sent to an oven, outlet 43a, or alternatively, added to a solution of carboxymethylcellulose 61 for making a slurry of calcium carbonate exiting from the process 100 at 43b.

The solid product exiting from oven 6 can be withdrawn from the process 100, outlet 44a, or alternatively be subject to further treatment to obtain a secondary product, as described below.

In a possible embodiment of the invention and shown in figure 2, the solid product exiting from oven 6 is added to a predetermined amount of a 30% solution of calcium hydroxide, block 20. This forms a solution of calcium chloride with all the chloride available and, with an appropriate pH adjustment, the precipitation of the many cations present can be obtained. Then a filtration follows, block 21, for separating the solution of calcium chloride and recirculating it in process 100 into the reservoir, block 9. The resulting solid inert material, containing for example clay, feldspar and quartz, as well as salts precipitated at the pH adjustment and separated at filtration 21, is mixed with sodium silicate ($NaSiO_3$) coming from line 62 for then feeding a rotational oven, block 22, for eliminating the humidity present and obtaining a dry product.

The dry solid is then milled, block 23, for example by means of a hammer mill, to obtain thin powder from the solid. The powder is supplied to a mixer, block 24, where sand 63 and cement 64 are added in various determined proportions in order to obtain a ready-to-use mortar corresponding to particular requirements collected at to the outlet 44b, normally called $M_I$, $M_{II}$ and $M_{III}$.

The process above described is shown in figure 3. The formulas of the main reactions for the production of calcium carbonate are the following:

$$CaCO_3 + 2NH_4Cl \xrightarrow{\phi} CaCl_2 + (NH_4)_2CO_3$$

$$(NH_4)_2CO_3 + CaCl_2 \rightarrow CaCO_3 + 2NH_4Cl$$

The foregoing description of a specific embodiment will so fully reveal the invention according to the conceptual point of view, so that others, by applying current knowledge, will be able to modify and/or adapt for various applications such an embodiment without further research and without parting from the invention, and it is therefore to be understood that such adaptations and modifications will have to be considered as equivalent to the specific embodiment. The means and the materials to realise the different functions described herein could have a different nature without, for this reason, departing from the field of the invention. It is to be understood that the phraseology or terminology employed herein is for the purpose of description and not of limitation.

## Claims

**1.** Process for separating and extracting calcium carbonate from calcareous mud **characterised in that** it provides the steps of:

- reaction of the mud, that can be separated from the excess water, with a solution of ammonium chloride obtaining a gaseous product and a solid product;
- treating the gaseous product with a solution of calcium chloride obtaining a solution of calcium carbonate and ammonium chloride;
- separating from said solution of calcium carbonate and ammonium chloride a product rich of calcium carbonate and a solution of ammonium chloride; and
- circulating again said solution of ammonium chloride into the step of reaction of the mud.

**2.** Process, according to claim 1, wherein the further following steps are provided:

- reaction of said solid product with a aqueous solution at a predetermined pH;
- separating from said reaction a solution of calcium chloride and an inert precipitate;
- circulating again said solution of calcium chloride into said step of treating the gaseous product.

**3.** Process, according to claim 2, wherein the further following steps are provided:

- treating said inert precipitate with a soluble reagent capable of forming insoluble salts with calcium, obtaining a solid intermediate product, in particular said soluble reagent is chosen among: sodium silicate, potassium silicate, sulphuric acid, sodium sulphate, potassium sulphate, sodium fluoride
- drying and milling said intermediate product;
- treating the intermediate product dried and milled with sand and cement making a ready-for-use mortar.

**4.** Process, according to claim 1, wherein said product rich of calcium carbonate is subject to rinsing in water and then to concentration by separating the rinsing water and to treating for obtaining a slurry containing calcium carbonate, with the addition of emulsifying agents for decelerating the decantation of the calcium carbonate.

**5.** Process, according to claim 4, wherein said emulsifying agents are chosen among: carboxymethylcellulose, methylcellulose, ethylcellulose, arabian gum, polyvinyl chloride, emulsions of latex and gum

**6.** Process, according to claim 1, wherein said product rich of calcium carbonate is sent to an oven and dried.

**7.** Process, according to claim 1, wherein said reaction of said mud and said solution of ammonium chloride is carried out in an oven at a temperature set between 270°C and 450°C.

**8.** Process, according to claim 1, wherein said solution of ammonium chloride separated by said product rich of calcium carbonate is concentrated by evaporation before being circulated again into said step of reaction of the mud.

**9.** Process, according to claim 1, wherein said treatment of said gaseous product with said solution of calcium chloride is carried out in an absorption column, for achieving predetermined reaction rates and concentrations, the recirculation in the column of the liquid and of the gas present being provided.

**10.** Process, according to claim 2, where the pH adjustment of the solid product coming from the reaction of the filtered mud and of the ammonium chloride is made by means of addition of a predetermined amount of a solution of calcium hydroxide.

Fig. 1

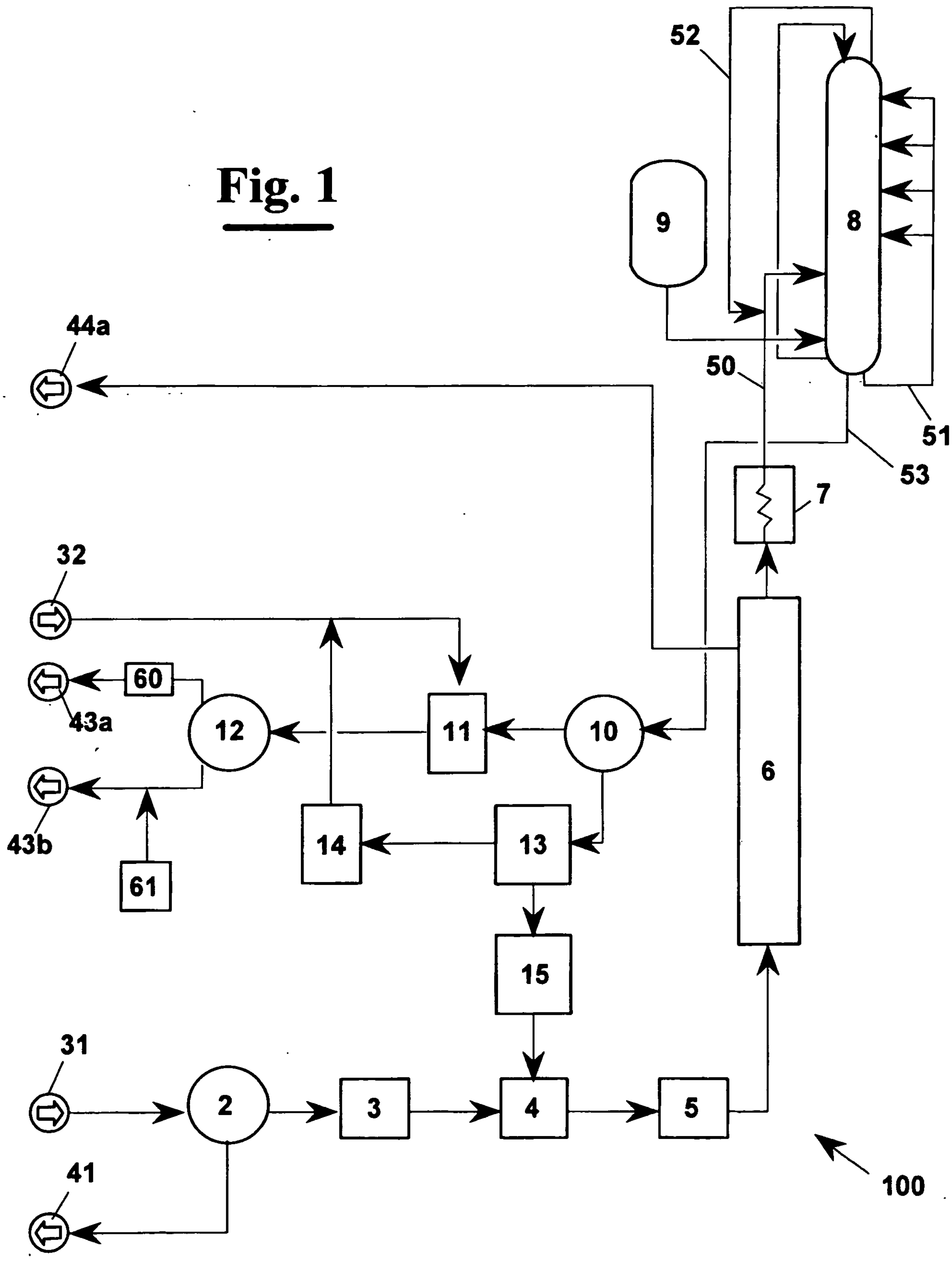

52
8
9
44a
50
51
53
7
32
60
43a
12
11
10
6
43b
14
13
61
15
31
2
3
4
5
41
100

Fig. 2

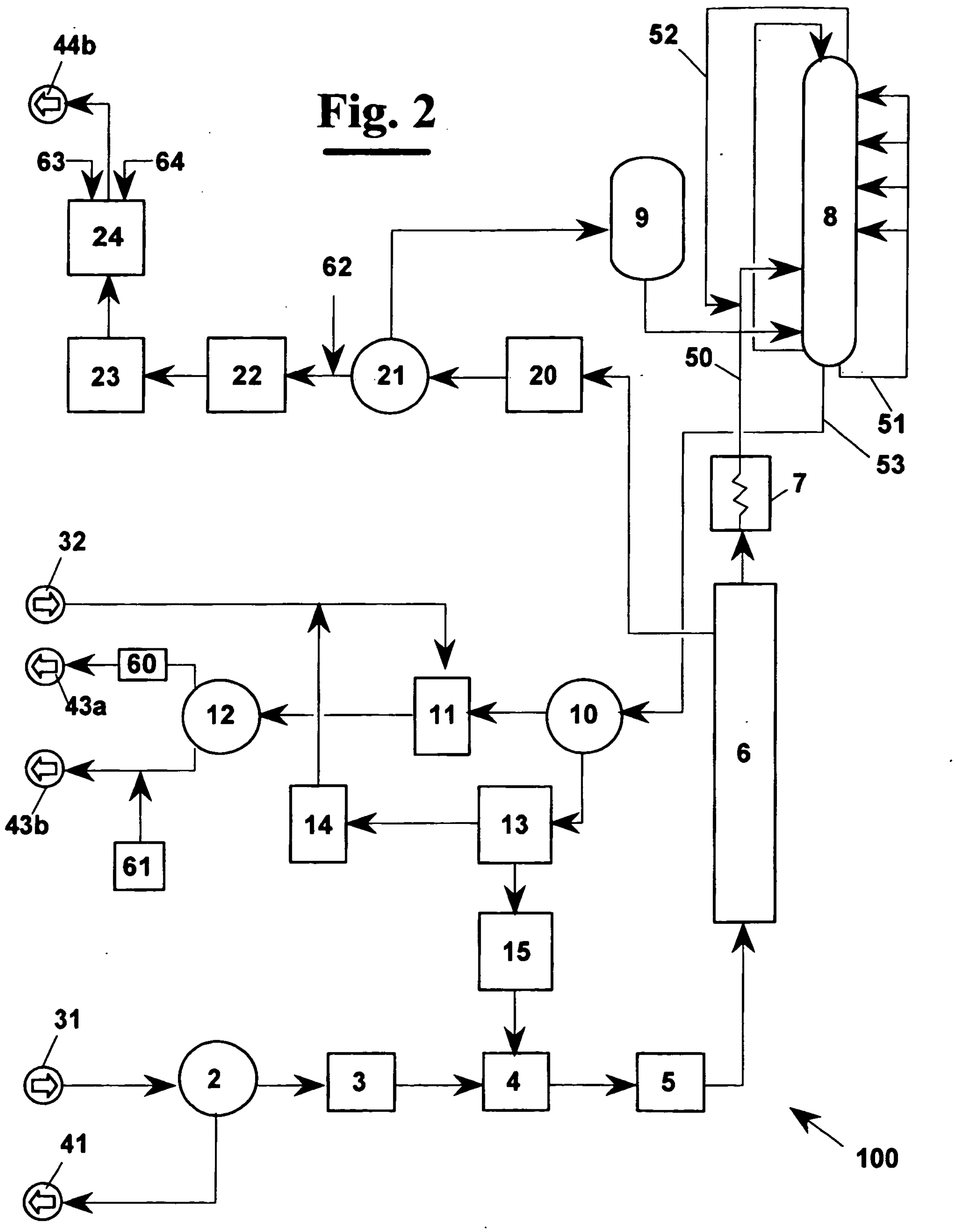
44b
63
64
24
23
22
62
21
20
9
8
52
50
51
53
7
32
60
43a
12
11
10
6
43b
61
14
13
15
31
2
3
4
5
41
100

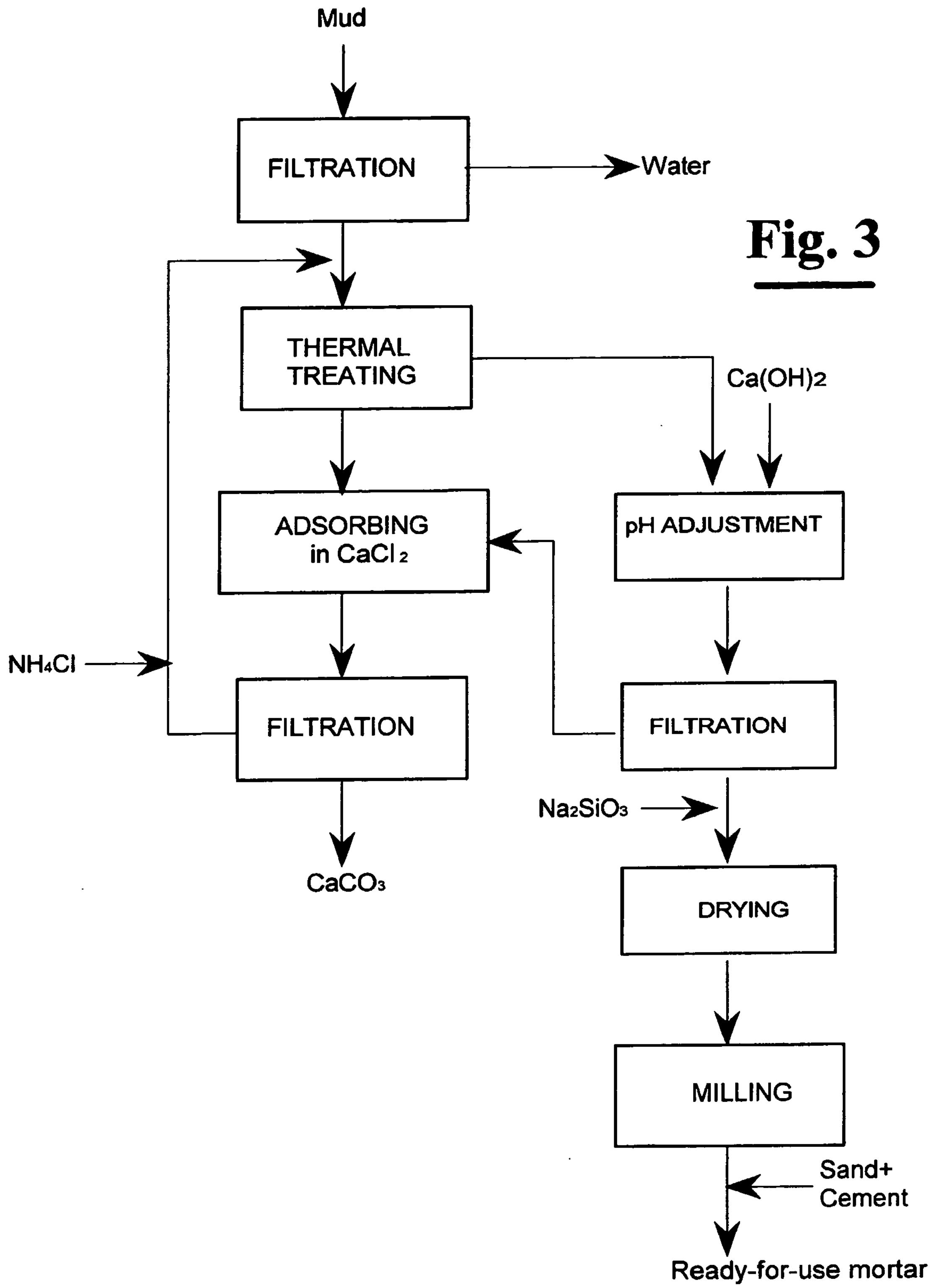
Mud
FILTRATION
Water
THERMAL TREATING
Ca(OH)2
ADSORBING in CaCl2
pH ADJUSTMENT
NH4Cl
FILTRATION
FILTRATION
Na2SiO3
CaCO3
DRYING
MILLING
Sand+ Cement
Ready-for-use mortar

Fig. 3

European Patent Office

# EUROPEAN SEARCH REPORT

Application Number
EP 03 00 4734

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | GB 2 238 528 A (ECOMETAL SRL) 5 June 1991 (1991-06-05) * page 5 - page 10; claims 1-11 * | 1-10 | C02F11/14 C02F1/26 C02F1/52 C01F11/18 |
| X | US 2 044 799 A (MACCARTHY JOHN D) 23 June 1936 (1936-06-23) * page 1, right-hand column, line 24 - page 2, left-hand column, line 45; figure 1 * | 1-10 | |
| A | PATENT ABSTRACTS OF JAPAN vol. 018, no. 134 (C-1176), 4 March 1994 (1994-03-04) & JP 05 319817 A (MARUO CALCIUM CO LTD), 3 December 1993 (1993-12-03) * abstract * | 4,5 | |
| A | ES 8 500 607 A (BELLO CASTILLO JOSE A ;PIEDRAFITA PALACIOS ADOLFO (ES)) 16 January 1985 (1985-01-16) * page 1, line 7 - page 5, line 5; claims 1-5 * | 1-10 | TECHNICAL FIELDS SEARCHED (Int.Cl.7) |
| A | DATABASE WPI Section Ch, Week 199722 Derwent Publications Ltd., London, GB; Class E33, AN 1997-236657 XP002255193 & CN 1 099 354 A (ZHANGJIABA SALT-MAKING CHEM PLANT), 1 March 1995 (1995-03-01) * abstract * | 1-10 | C02F C01F |

The present search report has been drawn up for all claims

| Place of search | Date of completion of the search | Examiner |
|---|---|---|
| MUNICH | 26 September 2003 | Glod, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 03 00 4734

This annex lists the patent family members relating to the patent documents cited in the above-mentioned European search report.
The members are as contained in the European Patent Office EDP file on
The European Patent Office is in no way liable for these particulars which are merely given for the purpose of information.

26-09-2003

| Patent document cited in search report | | Publication date | Patent family member(s) | | Publication date |
|---|---|---|---|---|---|
| GB 2238528 | A | 05-06-1991 | IT | 1236233 B | 27-01-1993 |
| | | | CA | 2025161 A1 | 21-04-1991 |
| | | | DE | 4033232 A1 | 25-04-1991 |
| | | | ES | 2026406 A6 | 16-04-1992 |
| | | | FR | 2653450 A1 | 26-04-1991 |
| US 2044799 | A | 23-06-1936 | NONE | | |
| JP 05319817 | A | 03-12-1993 | JP | 2943826 B2 | 30-08-1999 |
| | | | KR | 123539 B1 | 20-11-1997 |
| ES 8500607 | A | 16-01-1985 | ES | 8500607 A1 | 16-01-1985 |
| CN 1099354 | A | 01-03-1995 | NONE | | |

EPO FORM P0459

For more details about this annex : see Official Journal of the European Patent Office, No. 12/82